# EUROPÄISCHE PATENTSCHRIFT

(11) **EP 3 042 171 B1**
(45) Veröffentlichungstag und Bekanntmachung des Hinweises auf die Patenterteilung: **14.02.2018**
(21) Anmeldenummer: 14759206.7
(22) Anmeldetag: 05.09.2014
(51) Int. Cl.: G01L 3/10

(54) **VERFAHREN ZUM BETREIBEN EINES MAGNETOSTRIKTIVEN SENSORS**
METHOD FOR OPERATING A MAGNETOSTRICTIVE SENSOR
PROCÉDÉ PERMETTANT DE FAIRE FONCTIONNER UN CAPTEUR MAGNÉTOSTRICTIF

(30) Priorität: 06.09.2013 DE 102013217835
(43) Veröffentlichungstag der Anmeldung: 13.07.2016
(73) Patentinhaber: Continental Teves AG&Co. Ohg, 60488 Frankfurt (DE)
(72) Erfinder: RINK, Klaus, 63517 Rodenbach (DE); JÖCKEL, Wolfgang, 36129 Gersfeld (DE)
(86) Internationale Anmeldenummer: PCT/EP2014/068984
(87) Internationale Veröffentlichungsnummer: WO 2015/032917

(56) Entgegenhaltungen:
- EP-A1- 1 752 752
- EP-A2- 2 549 255
- US-A1- 2011 308 330

## Beschreibung

Die Erfindung betrifft ein Verfahren zum Betreiben eines magnetostriktiven Sensors, eine Steuervorrichtung zur Durchführung des Verfahrens und einen magnetostriktiven Sensor mit der Steuervorrichtung.

Aus der EP 2 549 255 A2 ist ein magnetostriktiver Sensor zur Drehmomentbestimmung an einer Welle bekannt, bei dem als Messaufnehmer eine Primärspule und mehrere Sekundärspulen senkrecht zur Welle angeordnet sind.

EP 1 752 752 A1 beschreibt einen Sensor, bei dem ein an einer Welle angreifendes Drehmoment nach dem Prinzip der Magnetostriktion ein Magnetfeld hervorruft und sich einer Induktivität überlagert, so dass zwischen den Spulen eines Messaufnehmers eine Mess-Asymmetrie entsteht, die das Drehmoment an der Welle kennzeichnet.

Die US 2011/308330 A1 beschreibt, wie ein Drehmoment oder eine Kraft mit Hilfe einer Magnetfluss-Linie gemessen werden kann, die an einem Punkt in ein ferromagnetisches Objekt eintritt und an einem anderen Punkt, je nach wirkender Kraft leicht verschoben, austritt.

Aus der DE 10 2006 018 480 A1 ist Verfahren zur Messung eines mechanischen Druckes mit einem magnetostriktiven Sensor bekannt.

Es ist Aufgabe der Erfindung, das bekannte Verfahren zu verbessern, wie in Ansprüchen 1-7 vorgeschlagen. Das heißt, dass wenn an das magnetostriktive Element ein bekanntes wechselndes Eingangssignal angelegt wird, dann senken sich die Hystereseeffekte für alle auf dieses wechselnde Eingangssignal aufgeschlagenen zu messenden Signale deutlich. Das bekannte Eingangssignal braucht dann nur noch bei der Verarbeitung des das zu messende Signal enthaltende Ausgabesignals des magnetostriktiven Sensors beispielsweise durch Herausrechnen berücksichtigt zu werden.

Da mit einem magnetostriktiven Sensor physikalische Felder gemessen werden, wird als zuvor genanntes bekanntes wechselndes Eingangssignal ein Wechselfeld gewählt. Bekanntermaßen beschreibt ein physikalisches Feld die räumliche Verteilung physikalischer Größen, die in einer Weiterbildung des angegebenen Verfahrens beispielsweise ein magnetische Feldstärke oder eine mechanische Feldstärke, wie beispielsweise ein Druck sein können. Somit könnte das Wechselfeld ein mechanisches Wechselfeld oder ein magnetisches Wechselfeld sein. Alternativ könnten auch beide Feldarten gleichzeitig verwendet werden.

In einer zusätzlichen Weiterbildung des angegebenen Verfahrens ist das Wechselfeld ein Mischfeld aus einem Gleichanteil und einem Wechselanteil. Dieser Weiterbildung liegt die Überlegung zugrunde, dass die oben genannte Hysteresekurve des magnetostriktiven Elements eine Magnetisierungskurve und eine Entmagnetisierungskurve aufweist. Nach dem Wegfall eines zu messenden Feldes an dem magnetostriktiven Element baut sich an dem magnetostriktiven Element zwischen den nun freiligenden Polflächen des magnetostriktiven Elementes ein neues Magnetfeld auf. Der sich ergebende Wert für dieses Magnetfeld wird magnetischer Arbeitspunkt genannt. Durch das Anlegen des Mischfeldes mit einem Gleichanteil und einem Wechselanteil wird erreicht, dass das magnetostriktive Element dauerhaft bei diesem magnetischen Arbeitspunkt magnetisiert wird. Dabei hebt der Gleichanteil die Magnetisierung auf den magnetischen Arbeitspunkt und der Wechselanteil sorgt dafür, dass die Magnetisierung nicht wieder verloren geht. Auf diese Weise können die Messungen mit dem magnetostriktiven Sensor alle auf der Entmagnetisierungskurve des magnetostriktiven Elements durchgeführt werden, so dass sich selbst bei einem Vorzeichenwechsel des zu messenden Eingangssignals (Feldes) kaum Phasenverschiebungen ergeben.

Der Messaufnehmer kann jedes beliebige Element sein, das den magnetostriktiven Effekt des magnetostriktiven Elements erfassen kann. In einer besonderen Weiterbildung umfasst der Messaufnehmer einen Übertrager mit einer Primärspule und einer Sekundärspule, die jeweils um das magnetostriktive Element gewickelt sind. Auf diese Weise können der magnetostriktive Effekt und damit das zu messende Feld in einfacher Weise basierend auf dem sich durch den magnetostriktiven Effekt ändernden Kopplungsfaktor zwischen den beiden Spulen erfasst werden. Das einzukoppelnde Wechselfeld kann dabei an jeder beliebigen Stelle in das magnetostriktive Element eingekoppelt werden. Vorzugsweise wird das Wechselfeld jedoch in das magnetostriktive Element zwischen der Primärspule und der Sekundärspule eingekoppelt, da der Kopplungsfaktor an dieser Stelle zwischen den beiden Spulen am stärksten beeinflusst wird und somit die sich durch das angegebene Verfahren einstellende Wirkung am größten ist. Nach der Erfindung wird das Wechselfeld basierend auf einem elektrischen Erregersignal erregt. Dazu wird ein mechanisches Piezo-Element verwendet.

In einer bevorzugten Weiterbildung umfasst das angegebene Verfahren den Schritt Filtern des Ausgangssignals aus dem Messaufnehmer basierend auf dem elektrischen Erregersignal. Unter einem Filtern soll dabei ein Schritt verstanden werden, bei dem zumindest Signalanteile des Erregersignals aus dem Ausgangssignal entfernt werden. Dies kann durch jede beliebige Filterfunktion, wie beispielsweise Mischen durchgeführt werden.

In einer besonders bevorzugten Weiterbildung des angegebenen Verfahrens wird das Filtern des Ausgangssignals mit einem Tiefpassfilter durchgeführt, dessen Grenzfrequenz von der Frequenz des Wechselfeldes abhängig ist. Ein derartiger Tiefpassfilter kann auch betrieben werden, ohne dass das Erregersignal unmittelbar an diesem vorhanden ist, weil er lediglich die sich in der Regel nicht verändernde Frequenz des Erregersignals und damit des Wechselfeldes benötigt, so dass das Filtern besonders einfach durchführbar ist.

Gemäß einem weiteren Aspekt der Erfindung ist eine Steuer-vorrichtung eingerichtet, eines der angegebenen Verfahren durchzuführen.

In einer Weiterbildung der angegebenen Steuervorrichtung weist die angegebene Vorrichtung einen Speicher und einen Prozessor auf. Dabei ist eines angegebenen Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte eines der angegebenen Verfahren durchzuführen, wenn das Computerprogramm auf einem Computer oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

Gemäß einem weiteren Aspekt der Erfindung umfasst ein magnetostriktiver Sensor eine der angegebenen Steuervorrichtungen.

Der magnetostriktive Sensor kann in jeder beliebigen Applikation, beispielsweise in einem Fahrzeug zum Erfassen eines Momentes an einer Torsionswelle, wie einer Lenkwelle oder einer Aufstandskraft an einem Lager verwendet werden.

Gemäß einem weiteren Aspekt der Erfindung umfasst daher ein Fahrzeug einen der angegebenen magnetostriktiven Sensoren.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine schematische Ansicht eines Fahrzeuges,
Fig. 2 eine schematische Ansicht eines Lenkwinkelsensors,

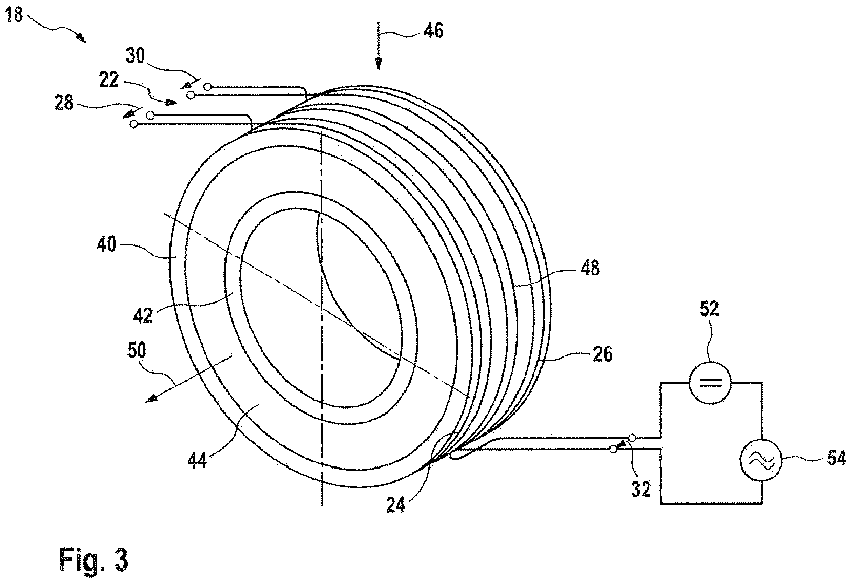

Fig. 3 eine schematische Ansicht eines Radaufstandssensors,
Fig. 4 eine Hysteresekurve eines magnetostriktiven Messaufnehmers,
Fig. 5 einen Ausschnitt der Hysteresekurve aus Fig. 4, und
Fig. 6 eine Schaltung für den Lenkwinkelsensor der Fig. 2 oder den Radaufstandssensor der Fig. 3 zeigen.

In den Figuren werden gleiche technische Elemente mit gleichen Bezugszeichen versehen und nur einmal beschrieben.

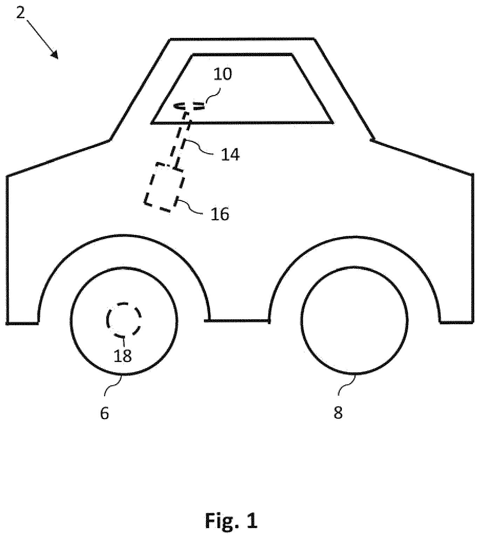

Es wird auf Fig. 1 Bezug genommen, die eine schematische Ansicht eines Fahrzeuges 2 zeigt.

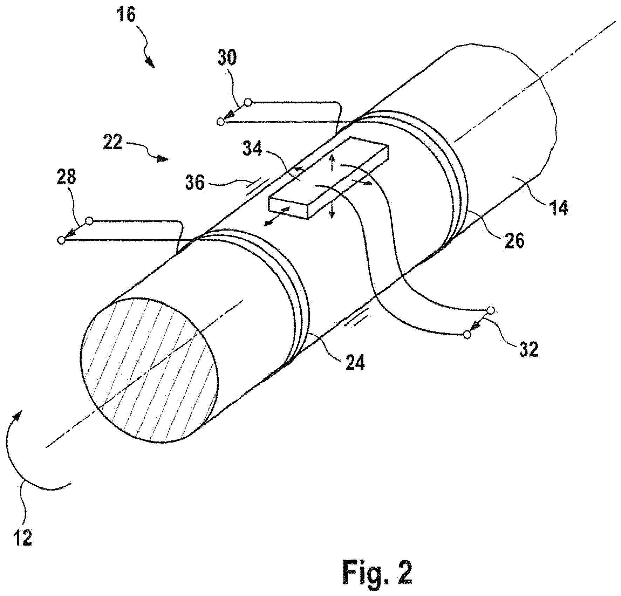

Das Fahrzeug 2 umfasst in an sich bekannter Weise ein Chassis 4, das auf Vorderrädern 6 und Hinterrädern 8 fahrbar getragen wird. Ein Radeinschlag der Vorderräder 6 kann dabei mittels eines Lenkrades 10 eingestellt werden, wobei ein in Fig. 2 referenzierter Lenkwinkel 12 durch das Lenkrad 10 eingestellt und über eine Lenkstange 14 an einen Lenkwinkelsensor 16 übertragen wird, der dann den Lenkwinkel 12 in einem elektrischen Ausgangssignal 30 ausgibt, welches wiederum zur Ansteuerung eines nicht gezeigten, den Radeinschlag einstellenden Aktuators verwendet werden kann.

Das Fahrzeug 2 umfasst ferner einen Radaufstandssensor 18, mit dem ein mechanischer Lastzustand normal zur Bodenfläche des Fahrzeuges 2 gemessen werden kann. Dieser Lastzustand kann beispielsweise verwendet werden, um eine Überladung des Fahrzeuges 2 zu ermitteln.

Es wird auf Fig. 2 Bezug genommen, die eine schematische Ansicht des Lenkwinkelsensors 16 zeigt.

Der Lenkwinkelsensor 16 umfasst einen Übertrager mit einer Primärspule 24 und einer Sekundärspule 26, die jeweils in einem bestimmten Abstand zueinander um die Lenkstange 14 gewickelt sind. Die Lenkstange 14 ist in der vorliegenden Ausführung aus einem magnetostriktiven Material gefertigt, so dass die Primärspule 24 und die Sekundärspule 26 über die Lenkstange 14 miteinander gekoppelt sind.

Die Lenkwelle 14 kann beispielsweise in nicht weiter dargestellter Weise einseitig befestigt sein. Wird die Lenkwelle 14 über das Lenkrad 10 um den Lenkwinkel 12 verdreht, so baut das magnetostriktive Material der Lenkwelle 14 ein nicht weiter dargestelltes Magnetfeld auf und ändert damit die Kopplung zwischen der Primärspule 24 und der Sekundärspule 26. Ein in die Primärspule 24 eingespeistes Übertragungssignal 28 wird damit abhängig vom an die Lenkwelle 14 angelegten Lenkwinkel 12 verschieden verändert und als Ausgangssignal 30 an der Sekundärspule 26 ausgegeben. Daher kann aus dem Ausgangssignal 30 eine Information über den Lenkwinkel 12 ausgelesen werden.

Der oben genannte Aufbau des Magnetfeldes ist jedoch einer Hysterese unterworfen. Das heißt, dass nach Wegfall der Verdrehung durch den Lenkwinkel 12 zumindest ein Teil des aufgebauten Magnetfeldes bestehen bleibt und somit die Information über den Lenkwinkel 12 im Ausgangssignal 30 verfälscht. Um die Auswirkungen dieser Hysterese im Ausgangssignal 30 und damit Messfehler bei der Erfassung des Lenkwinkels zu mindern wird im Rahmen des vorliegenden Ausführungsbeispiels vorgeschlagen, mit basierend auf einem elektrischen Erregersignal 32 über ein Piezoelement 34 ein mechanisches Wechselfeld 36 auf die magnetostriktive Lenkwelle 14 aufzubringen. Durch dieses mechanische Wechselfeld 36 wird an die magnetostriktive Lenkwelle 14 ein magnetischer Arbeitspunkt 38 angelegt, der die magnetostriktive Lenkwelle 14 dauerhaft magnetisiert und somit teilweise in die magnetische Sättigung führt. Ab dieser Sättigung wird die verbleibende Hysterese der magnetostriktiven Lenkwelle 14 reduziert und somit die Präzision bei der Messung des Lenkwinkels 12 gesteigert.

Nachstehend soll das Anlegen des magnetischen Arbeitspunktes 38 basierend auf dem Erregersignal 32 beispielhaft anhand der um den magnetostriktiven Außenring 40 gewickelten Erregerspule 48 beschrieben werden. In der gleichen Weise kann jedoch der magnetische Arbeitspunkt 38 basierend auf dem Erregersignal 32 auch über das Piezoelement 34 an die magnetostriktive Lenkwelle 14 angelegt werden, weshalb eine eigene Beschreibung hierzu der Kürze halber weggelassen wird.

Das Erregersignal 32 wird in der vorliegenden Ausführung basierend auf einer Gleichspannung 52 und einer diese überlagernden reinen Wechselspannung 54 erzeugt. Das Erregersignal 32 ist somit eine Mischspannung mit einem Gleichanteil und einem Wechselanteil, die nachstehend der Übersichtlichkeit halber entsprechend mit den Bezugszeichen 52 und 54 entsprechend ihrer Spannungen referenziert werden.

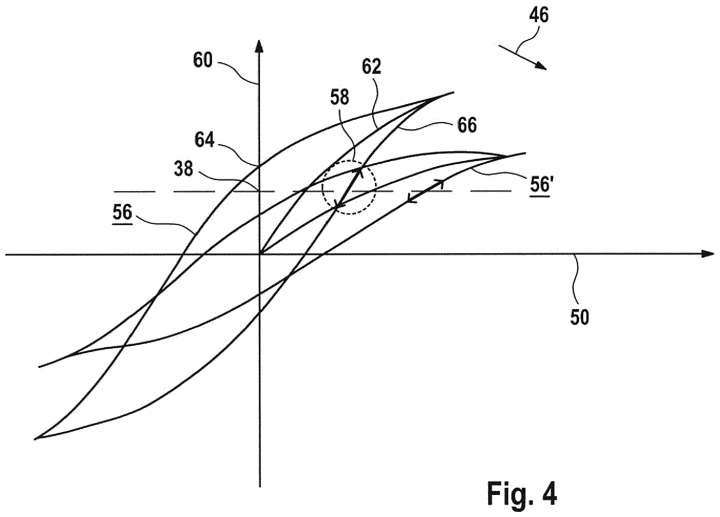

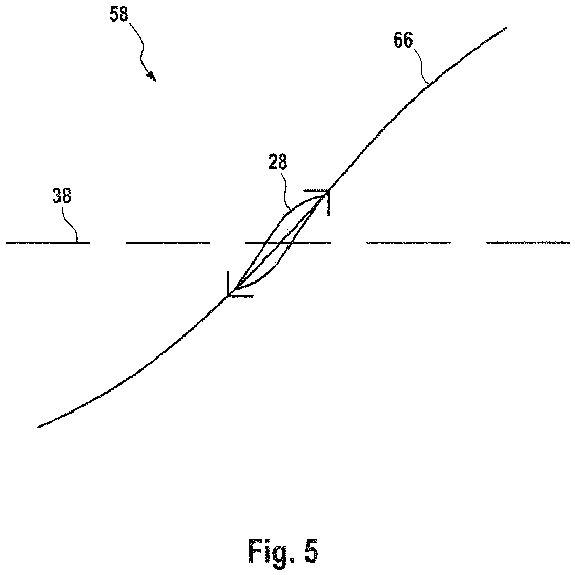

Diese hysteresemindernde Wirkung soll nachstehend anhand der Fig. 4 und 5 näher erläutert werden, die entsprechend eine Hysteresekurve 56 des Außenringes 40 als magnetostriktiven Messaufnehmer 14, 40 und einen Ausschnitt 58 der Hysteresekurve 56 zeigen, die entsprechend die Flussdichte 60 im magnetostriktiven Außenring 40 über das magnetische Erregerfeld 50 beschreibt.

Beim erstmaligen Anlegen des Gleichanteils 52 wird der magnetostriktive Außenring 40 auf einer Neukurve 62 der Hysteresekurve 56 magnetisiert. Fällt die Erregerspannung 32 aufgrund des nun wirkenden Wechselanteils 54 wieder ab, so baut sich ein neues Magnetfeld zwischen den nun freiliegenden Polflächen des magnetostriktiven Außenrings 40 auf, das den, den magnetostriktiven Außenring 40 umgebenden permeablen Raum durchsetzt und dabei dem magnetostriktiven Außenring 40 Energie entzieht. Daher liegen die offene Magnetisierung des magnetostriktiven Außenrings 40 und damit sein magnetischer Arbeitspunkt 38 etwas unterhalb der an sich bekannten Remanenzflussdichte 64.

Diesen magnetischen Arbeitspunkt 38 nimmt der magnetostriktive Außenring 40 jedoch nicht auf der Neukurve 62 sondern auf der Entmagnetisierungskurve 66 der Hysteresekurve 56 ein. Wird nun an die Primärspule 24 das Übertragungssignal 28 angelegt, ist aus Fig. 5 unmittelbar erkennbar, dass die Hysterese aufgrund dieses Übertragungssignals 28 um den magnetischen Arbeitspunkt 38 herum auftritt und viel kleiner ist, als die eigentliche Hysterese 56 des magnetostrikitven Außenrings 40. Zudem wird die Wahrscheinlichkeit, dass durch den magnetischen Arbeitspunkt 38 die magnetische Flussdichte 60 des Außenrings 40 negativ wird und somit Phasensprünge in der Übertragung zwischen der Primärspule 24 und der Sekundärspule 26 auftreten verringert.

Wird nun an den magnetostriktiven Außenring 40 die Radaufstandskraft 46 angelegt, so wird die Hysteresekurve 56 des Außenrings 40 aufgrund der magnetostriktiven Eigenschaften des Außenrings 40 zur Achse der magnetischen Flussdichte 60 hin gestreckt, was durch das Bezugszeichen 56' angedeutet ist. Durch diese Streckung ändern sich erkennbar die Steigung der Entmagnetisierungskurve 66 und damit die relative Permeabilität des Außenrings 40. Mit der relativen Permeabilität des Außenrings 40 ändert sich auch sein magnetischer Widerstand, weshalb das Übertragungssignal 28 ohne die angelegte Radaufstandskraft 46 über den Übertrager 22 mit einer anderen Dämpfung übertragen wird als mit der angelegten Radaufstandskraft. Diese Dämpfung des Übertragungssignals 28 ist aus dem abgreifbaren Ausgangssignal 30 in an sich bekannter Weise auslesbar.

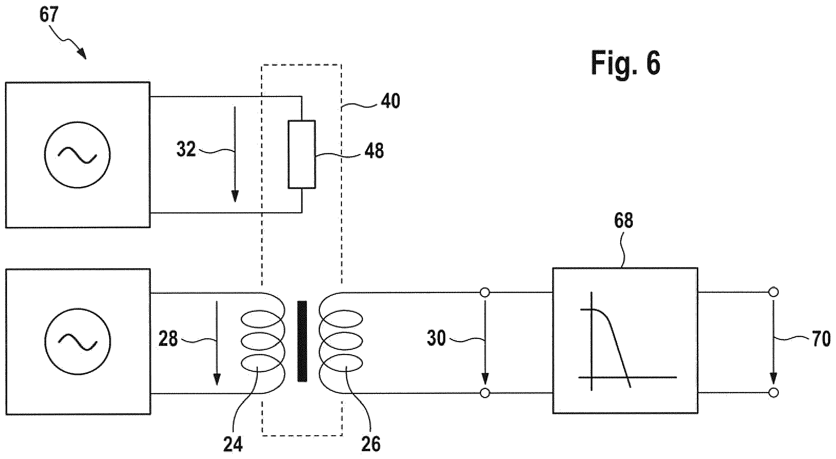

Dazu muss das Ausgangssignal 30 jedoch zuvor von den Signalanteilen befreit werden, die durch das Erregersignal 32 hervorgerufen werden. Dies kann, wie durch die in Fig. 6 dargestellte, als Steuervorrichtung verwendbare Schaltung 67 gezeigt, beispielsweise durch ein Tiefpassfilter 68 erfolgen, da der Gleichanteil über den Übertrager 22 nicht von der Erregerspule 48 auf die Sekundärspule 26 übertragen werden kann. Wird das Tiefpassfilter 68 geeignet dimensioniert, kann aus dem Ausgangssignal 30 der Wechselanteil 54 des Erregersignals 32 herausgefiltert werden, so dass dem am Ausgang des Tiefpassfilters 68 anliegenden Tiefpasssignals 70 in bekannter Weise die Radaufstandskraft 46 entnehmbar ist.

## Patentansprüche

1. Verfahren zum Betreiben eines magnetostriktiven Sensors (16, 18) mit einem magnetostriktiven Element (14, 40) und einem Messaufnehmer (22) zum Erfassen eines magnetischen Widerstandes des magnetostriktiven Elementes (14, 40), wobei der Messaufnehmer (22) einen Übertrager mit einer Primärspule (24) und einer Sekundärspule (26) umfasst, die jeweils um das magnetostriktive Element (14, 40) gewickelt sind, **gekennzeichnet durch** Einkoppeln eines mechanischen Wechselfeldes (36, 50) in das magnetostriktive Element (14, 40) basierend auf einem elektrischen Erregersignal (32), wobei das elektrische Erregersignal (32) mittels eines Piezo-Elements in das einzukoppelnde mechanische Wechselfeld (36, 50) umgewandelt wird.

2. Verfahren nach Anspruch 1, wobei das mechanische Wechselfeld (36, 50) ein Mischfeld aus einem Gleichanteil (52) und einem Wechselanteil (54) umfasst.

3. Verfahren nach einem der vorstehenden Ansprüche, wobei das mechanische Wechselfeld (36, 50) in das magnetostriktive Element (14, 40) zwischen die Primärspule (24) und die Sekundärspule (26) eingekoppelt wird.

4. Verfahren nach einem der vorstehenden Ansprüche, umfassend Filtern eines Ausgangssignals (30) aus dem Messaufnehmer (22) basierend auf dem elektrischen Erregersignal (32).

5. Verfahren nach Anspruch 4, wobei das Filtern des Ausgangssignals (30) mit einem Tiefpassfilter (68) durchgeführt wird, dessen Grenzfrequenz von der Frequenz des mechanischen Wechselfeldes (36, 50) abhängig ist.

6. Steuervorrichtung (67), die eingerichtet ist, ein Verfahren nach einem der vorstehenden Ansprüche auszuführen.

7. Magnetostriktiver Sensor (16, 18) umfassend eine Steuervorrichtung (67) nach Anspruch 6.

## Claims

1. Method for operating a magnetostrictive sensor (16, 18) having a magnetostrictive element (14, 40) and a measuring sensor (22) for detecting a magnetic resistance of the magnetostrictive element (14, 40), wherein the measuring sensor (22) comprises a transformer with a primary coil (24) and a secondary coil (26) which are each wound around the magnetostrictive element (14, 40), **characterized by** coupling a mechanical alternating field (36, 50) into the magnetostrictive element (14, 40) on the basis of an electrical exciter signal (32), wherein the electrical exciter signal (32) is converted, by means of a piezo-element, into the mechanical alternating field (36, 50) which is to be input.

2. Method according to Claim 1, wherein the mechanical alternating field (36, 50) comprises a mixed field composed of a constant component (52) and an alternating component (54).

3. Method according to either of the preceding claims, wherein the mechanical alternating field (36, 50) is input into the magnetostrictive element (14, 40) between the primary coil (24) and the secondary coil (26) .

4. Method according to one of the preceding claims, comprising filtering an output signal (30) from the measuring sensor (22) on the basis of the electrical exciter signal (32).

5. Method according to Claim 4, wherein the filtering of the output signal (30) is carried out with a low pass filter (68) whose cutoff frequency is dependent on the frequency of the mechanical alternating field (36, 50) .

6. Control device (67) which is configured to carry out a method according to one of the preceding claims.

7. Magnetostrictive sensor (16, 18) comprising a control device (67) according to Claim 6.

## Revendications

1. Procédé permettant de faire fonctionner un capteur magnétostrictif (16, 18) comportant un élément magnétostrictif (14, 40) et un capteur de mesure (22) servant à détecter une résistance magnétique de l'élément magnétostrictif (14, 40), dans lequel le capteur de mesure (22) comprend un transducteur doté d'une bobine primaire (24) et d'une bobine secondaire (26) qui sont respectivement enroulées autour de l'élément magnétostrictif (14, 40), **caractérisé par** l'injection d'un champ alternatif mécanique (36, 50) dans l'élément magnétostrictif (14, 40) sur la base d'un signal d'excitation électrique (32), dans lequel le signal d'excitation électrique (32) est converti au moyen d'un élément piézoélectrique en le champ alternatif mécanique à injecter (36, 50).

2. Procédé selon la revendication 1, dans lequel le champ alternatif mécanique (36, 50) comprend un champ mixte constitué d'une partie continue (52) et d'une partie alternative (54).

3. Procédé selon l'une quelconque des revendications précédentes, dans lequel le champ alternatif mécanique (36, 50) est injecté dans l'élément magnétostrictif (14, 40) entre la bobine primaire (24) et la bobine secondaire (26).

4. Procédé selon l'une quelconque des revendications précédentes, comprenant le filtrage d'un signal de sortie (30) du capteur de mesure (22) sur la base du signal d'excitation électrique (32).

5. Procédé selon la revendication 4, dans lequel le filtrage du signal de sortie (30) est effectué au moyen d'un filtre passe-bas (68) dont la fréquence limite dépend de la fréquence du champ alternatif mécanique (36, 50) .

6. Dispositif de commande (67) qui est conçu pour mettre en oeuvre un procédé selon l'une quelconque des revendications précédentes.

7. Capteur magnétostrictif (16, 18) comprenant un dispositif de commande (67) selon la revendication 6.
